(19) **Europäisches Patentamt / European Patent Office / Office européen des brevets**

(11) **EP 2 550 123 B1**

(12) **EUROPÄISCHE PATENTSCHRIFT**

(45) Veröffentlichungstag und Bekanntmachung des Hinweises auf die Patenterteilung:
**22.11.2017   Patentblatt 2017/47**

(21) Anmeldenummer: **11710422.4**

(22) Anmeldetag: **07.03.2011**

(51) Int Cl.:
**B23B 51/00** *(2006.01)*   **B23B 51/02** *(2006.01)*

(86) Internationale Anmeldenummer:
**PCT/EP2011/001100**

(87) Internationale Veröffentlichungsnummer:
**WO 2011/116879 (29.09.2011 Gazette 2011/39)**

(54) **BOHRWERKZEUG**

DRILLING TOOL

OUTIL DE PERÇAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010   DE 102010012963**

(43) Veröffentlichungstag der Anmeldung:
**30.01.2013   Patentblatt 2013/05**

(73) Patentinhaber: **Klenk GmbH & Co. KG
88481 Balzheim (DE)**

(72) Erfinder:
- **WEIGAND, Manfred
  52066 Aachen (DE)**
- **SCHMID, Michael
  89186 Illerrieden (DE)**
- **SCHMID, Steffen
  89186 Illerrieden (DE)**
- **SÜESS, Bruno
  CH-1716 Plaffeien (CH)**
- **CLAUSEN, Rolf
  22850 Norderstedt (DE)**
- **HINTZE, Wolfgang
  21077 Hamburg (DE)**

- **SCHÜTTE, Christoph
  21423 Winsen / Luhe (DE)**
- **DOSE, Frank
  21423 Winsen (DE)**
- **MENSE, Lorenz
  21629 Neu Wulmstorf (DE)**
- **Ramme, Lars
  22359 Hamburg (DE)**

(74) Vertreter: **Ciesla, Dirk
  Plansee Group Service GmbH
  IP Department
  Metallwerk-Plansee-Strasse 71
  6600 Reutte (AT)**

(56) Entgegenhaltungen:
| | |
|---|---|
| WO-A1-99/21674 | CN-A- 101 524 768 |
| DE-A1- 19 735 024 | DE-A1-102009 033 942 |
| DE-A1-102009 049 087 | DE-U1- 20 304 580 |
| DE-U1- 29 803 261 | FR-A- 1 274 316 |
| FR-A1- 2 827 204 | JP-A- S55 150 905 |
| JP-A- 2009 039 811 | US-A- 4 810 136 |
| US-A- 5 944 462 | US-A1- 2009 087 275 |
| US-B1- 7 665 935 | |

EP 2 550 123 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Bohrwerkzeug gemäß dem Oberbegriff des Anspruchs 1, insbesondere zum Bohren von faserverstärkten Werkstoffen, wobei das Bohrwerkzeug zumindest eine Schneide aufweist.

Zu den faserverstärkten Werkstoffen gehören zum Beispiel faserverstärkte Kunststoffe. Diese oftmals endlos faserverstärkten Kunststoffe (insbesondere kohlenstofffaserverstärkte Kunststoffe (CFK), werden heutzutage aufgrund ihrer hervorragenden Eigenschaften zunehmend als Hochleistungswerkstoff zum Beispiel in der Luftfahrtindustrie eingesetzt. Zum Fügen dieser Werkstoffe müssen Nietbohrungen in großer Anzahl angefertigt werden. Aus dem besonderen Aufbau des Faserverbundwerkstoffes resultiert jedoch eine äußerst schwierige Zerspanbarkeit. Zu den faserverstärkten Werkstoffen, die mit dem in Frage stehenden Bohrwerkzeug zu bearbeiten sind, zählen grundsätzlich alle Faserverbundwerkstoffe, bei welchen in eine Matrixstruktur eine Faserverstärkung eingearbeitet ist. Dabei ist es bekannt, dass Kohlefasern, Glasfasern, Aramidfasern oder ähnliche Materialien in entsprechende Trägerstrukturen eingebettet sind. Die Trägerstrukturen umfassen zum Beispiel jegliche Art von Kunststoffen, aber auch Metall- oder Keramikstrukturen, die durch den Einbau der Fasern eine entsprechende Verstärkung erfahren. Der hier verwendete Begriff "Faser" ist dabei so zu verstehen, dass eine Faser jeweils aus ein oder mehreren Filamenten besteht, die zusammen die Faser bilden. Dabei ist die Faser im Sinne der Erfindung entweder eine verdrillte oder unverdrillte Anordnung einzelener Fasernfilamente nebeneinander. Typische Kohlenstofffasern besitzen dabei z. B. zwischen 1.000 und 60.000 Einzelfilamente, haben dabei einen durchschnittlichen Querschnitt von 0,1 mm bis circa 2,2 mm und besitzen ein Längengewicht von circa 60 bis 3.600 tex (1 tex ist 1 Gramm pro 1.000 Meter). Dabei können die Fasern endlos angeordnet sein oder aber es handelt sich um verhältnismäßig kürzere Abschnitte. Kohlefasern oder andere Fasern werden sowohl unidirektional wie auch flächig, zum Beispiel in einem Gewebe oder Ähnlichem, in den Faserverbundwerkstoff verbaut.

Es ist nun beobachtet worden, dass bei dem Erzeugen einer Bohrung in einem faserverstärkten Werkstoff Faserüberstände in das Bohrloch hineinstehen und so eine Nachbearbeitung notwendig machen. Dabei ist beobachtet worden, dass insbesondere die Fasern, die auf der Austrittsseite des Bohrers in dem Werkstück angeordnet sind, dazu neigen, dem Bohrer auszuweichen, wodurch dann diese Faserüberstände nicht abgetrennt werden. Dabei werden diese Faserüberstände in schneller Folge mechanisch stark belastet, was die Wandung der Bohrung im Bereich des Austrittes des Faserrestes belastet und zerstört. Im weiteren Verlauf besteht desweiteren die Gefahr einer sogenannten Delamination, also eines Auflösen des Verbundes zwischen den Fasern und der Matrix mit einhergehender erheblicher mechanischer Schwächung in diesem Bereich. Es ergibt sich daher, dass die Festigkeit des Verbundwerkstoffes gerade im Randbereich der Bohrung bei den herkömmlichen Bearbeitungen stark eingeschränkt ist. Die Lösungen nach dem Stand der Technik sind daher sehr aufwendig, da eine brauchbare Bohrung unter Umständen erst nach mehreren Bearbeitungsschritten zur Verfügung steht. Die eingesetzten Bohrwerkzeuge können aber auch zu einer mechanischen Beeinträchtigung beziehungsweise Schädigung im Bereich des Nietloches führen. Beide Eigenschaften führen letztendlich zu erheblichen zusätzlichen Kosten und Zeitverlust.

DE 197 35 024 A1 beschreibt einen Bohrer für zusätzliche Rückseitenbearbeitung, der es ermöglicht zu bohren und anschließend nach einer radialen Zustellung die rückseitige Bohrungskante anzufasen. Der Bohrer nutzt gegenläufige Drehrichtungen zum Bohren und Anfasen der Bohrungsrückseite, Die Rückwärtsschneide zum rückseitigen Anfasen ist am Bohrerrücken angeordnet, wodurch sie vor Beschädigungen durch Späne geschützt wird und durch den Drall der Spanabführnut einen positiven Spanwinkel aufweist.

WO 99/21674 A1 beschreibt einen Nachschneider mit einer ersten Schneide zum Nachbearbeiten der Innenumfangsfläche eines Durchgangsloches in einem Werkstück und einer zweiten und einer dritten Schneide an abgestuften Abschnitten am Ende eines Abschnittes mit kleinem Durchmesser. Nach der Nachbearbeitung der Innenumfangsfläche des Durchgangslochs mit der ersten Schneide werden die Öffnungskanten mit der zweiten und der dritten Schneide angefast.

Aus dem Stand der Technik sind mehrere Bohrwerkzeuge bekannt, die zum Bohren der weiter oben beschriebenen faserverstärkten Werkstoffe dienen sollen. So ist eine der Lösung bekannt, die eine Einschnürung am Bohrwerkzeug vorsieht. Eine andere Lösung zeigt dagegen eine an der Schneide beziehungsweise hinter der Schneide angeordnete Quernut auf. Ein Beispiel eines Bohrwerkzeugs gemäß dem Oberbegriff des Anspruchs 1 ist in DE 10 2009 049 087 A1 offenbart. Es ist Aufgabe der vorliegenden Erfindung, ein Bohrwerkzeug vorzuschlagen, welches zumindest eines der vorgenannten Nachteile überwindet.

Gelöst wird diese Aufgabe durch ein Bohrwerkzeug nach Anspruch 1. Bevorzugten optionalen Ausgestaltungen oder Varianten der Erfindung sind Gegenstand der Unteransprüche. Die Erfindung sieht eine einer Schneide in Vorschubrichtung des Bohrwerkzeuges nachlaufende, zumindest eine, jeweils eine Quernut oder eine Einschnürung begrenzende, eine Randkante aufweisende Randfläche vor, wobei eben diese Randkante zum Abtrennen der in die Bohrung einstehenden Faserüberständen (Faserstücken) dient. Die Quernut ist nicht mit der Spannut zu verwechseln, eine Spannut beginnt an der Werkzeugspitze, in Radialrichtung nach der Schneide, und zieht sich von dort nach hinten. Die Randkante ist gegebenenfalls auch schräg orientiert.

Die Funktionsweise des erfindungsgemäßen Bohrwerkzeuges ist dabei nun so, dass Fasern, die insbesondere im Austrittsbereich des Bohrwerkzeuges aus dem Wekstoff den umlaufenden Schneiden in schneller Folge auszuweichen vermögen, dann von der Randkante an der Quernut beziehungsweise der Einschnürung ergriffen und abgeschert oder abgeschlagen werden. Im Stand der Technik war es bekannt, in einem zweiten Bearbeitungsschritt die vorstehenden Faserrückstände abzutrennen. Dies erfolgt zum Beispiel mit einem Reibwerkzeug. Diese Vorgehensweise ist aufwendig, da der Zeitaufwand für die Erstellung der Bohrung erheblich verlängert wird, die Kosten also entsprechend steigen.

Ein wesentlicher Vorteil der Erfindung liegt darin, dass mit dem Vortrieb des Bearbeitungswerkzeuges sowohl die Bohrung erzeugt wird wie auch gleichzeitig die in das Bohrloch einstehenden Faserüberstände maßgenau abgetrennt werden. Mit dem einen Bohrvorgang wird dabei sowohl das Bohrloch erzeugt wie auch die Faserstücke/Faserüberstände abgetrennt.

Entgegen den im Stand der Technik bekannten Bohrwerkzeugen ist festzuhalten, dass die Erfindung einen wesentlichen Vorteil gegenüber diesen Lösungen aufweist. So besitzen beispielsweise Bohrwerkzeuge im Stand der Technik eine Einschnürung. Diese Einschnürung weist jedoch keine die Einschnürung begrenzende Randkante auf, die zum Abtrennen von Faserstücken vorgesehen ist. Dadurch wird es durch die Erfindung ermöglicht, die beschriebenen Nachteile im Stand der Technik, nämlich das Einstehen von Faserbestandteilen beziehungsweise Faserresten in die Bohrung zu beseitigen. Eine andere Lösung des Standes der Technik weist hinter der Schneide angeordnete Quernuten auf. Diese sind jedoch nicht so ausgestaltet, dass die Randkanten der Randfläche zum Abtrennen von Faserstücken vorgesehen sind. Dies löst allerdings die Erfindung in hervorragender Weise und sorgt dafür, dass saubere Bohrergebnisse in einem einzigen Arbeitsschritt erzeugt werden können.

Das erfindungsgemäße Bohrwerkzeug besitzt in einer optionalen Ausgestaltung, nur eine Vollbohrstufe, das heißt die Erstellung der Bohrung auf Nennweite erfolgt in einem Bohrschritt. Es ist aber bekannt, einer Vollbohrstufe eine oder mehrere Aufbohrstufen nachzuordenen, die entsprechend axial hintereinander angeordnet, nach und nach die Bohrung entsprechend auf das gewünschte Nennmaß aufweiten.

Sowohl die Vollbohrstufe wie auch die Aufbohrstufe sind dabei mit einer oder mehreren als Hauptschneide fungierenden Schneiden ausgestattet. Die Randkante befindet sich dabei zum Beispiel nach der die Vollbohrstufe definierenden Schneide beziehungsweise Hauptschneide. Bei Bohrwerkzeugen, die neben der Vollbohrstufe auch eine Aufbohrstufe aufweisen, sind verschiedene Hauptschneiden vorgesehen, wenigstens eine erste Hauptschneide für die Vollbohrstufe und mindestens eine weitere Hauptschneide für jede weitere Aufbohrstufe. Es ist dabei vorgesehen, dass jeder der Hauptschneiden (sowohl der Vollbohrstufe wie auch insbesondere der Aufbohrstufe) nachfolgend eine Randkante aufweisende Quernut oder Einschnürung vorgesehen ist, die zum Abtrennen von Faserstücken des faserverstärkten Werkstoffes dient.

Zur Vollständigkeit sei hier noch erwähnt, dass sowohl die Vollbohrstufe wie auch die Aufbohrstufe eine wie auch mehrere Hauptschneiden und diesen zugeordnete Randkanten besitzen können.

In einer weiteren bevorzugten Ausgestaltung der Erfindung, ist vorgesehen, dass die Randfläche bezüglich der Werkzeugachse radial verläuft und/oder gerundet beziehungsweise konvex, in sich eben, gewölbt beziehungsweise gewendelt ausgebildet ist. Die Ausgestaltung der Randfläche ist sehr variabel gestaltbar, wodurch die Schneideeigenschaften für das Abtrennen der Faserstücke entsprechend bestimmbar sind.

Die Erfindung ist im Hinblick auf die Anzahl von Randkanten in Bezug auf die Anzahl der Schneiden variabel auslegbar. Die Anzahl der Randkante/n kann kleiner, gleich oder größer als die Zahl der Schneiden. Hieraus resultiert für die Erfindung eine sehr variable Anpassbarkeit, wobei zu beachten ist, dass die Randkante/n ja auch eine entsprechende Schneidaufgabe haben, nämlich das Abtrennen der Faserstücke. Durch die Anordnung einer größeren Anzahl von Randkanten für diesen Zweck wird natürlich die Schneideffizienz und auch die Qualität des Bohrloches verbessert. Insbesondere ist die Anzahl der Randkanten prozessabhängig gestaltbar. Geschickterweise ist ein möglichst geringer axialer Abstand zwischen der Schneidenecke einer Schneide und der radial verlaufenden Randfläche vorgesehen. Diese geometrische Anordnung erlaubt es, dass kurz nachdem die Schneide einen Faserüberstand erzeugt hat, die nachlaufende Randkante der radial verlaufenden Randfläche diesen abtrennt. Dieser Umstand wird auch dadurch erreicht, dass die zum Abtrennen von Faserstücken dienende Randkante mit einem möglichst geringen axialen Abstand zur Schneide angeordnet ist. Es ist klar, dass sich dabei der axiale Abstand auf die Werkzeugachse bezieht.

Es kann auch vorgesehen, dass die Randfläche konvex oder konkav, gebogen oder gewendelt ist. Bevorzugt ist die Randfläche eben, wobei die ebene Randfläche dadurch gekennzeichnet ist, dass die Flächennormalen auf allen Punkten der ebenen Randfläche zueinander parallel sind. Bevorzugt ist es, dass nicht nur die allein bei der Vorschubrichtung des Bohrwerkzeuges wirkende, die radialverlaufende Randfläche begrenzende Randkante die Abschneid-, Abscher- oder Abschlagfunktion des Faserstückes ergibt, sondern auch die Randkante der (zweiten) Randfläche, die z. B den Nutboden (parallel zur Werkzeugachse) bildet. Dieser letztere Umstand funktioniert dabei natürlich nur dann, wenn der Durchmesser des Bohrwerkzeuges in diesem Bereich insgesamt unverändert ist. So ist es in einer erfindungsgemäßen Variante, die selbstverständlich auch im Zusammenhang mit sämtlichen, einzelnen oder Kombinationen der vorhergehenden und weiteren Ausführungsformen realisierbar ist, möglich, dass das Bohrwerkzeug eine zweite, an die radial orientierte Randfläche winklig anschließende, bevorzugt ebene Randfläche aufweist.

In einer bevorzugten Ausgestaltung der Erfindung ist vorgesehen, dass die Randkante eine Länge von maximal zwei Werkzeugumfängen besitzt. Es ist gefunden worden, dass die Randkante, welche an der Quernut beziehungsweise an der Einschnürung angeordnet ist, verhältnismäßig kurz sein kann, insbesondere sehr viel kürzer ist wie die Spannut. Da die die Randkante aufweisende Randfläche ähnlich wie die Spannut geneigt sein kann, ist die Länge der Randkante real auch größer als ein Werkzeugumfang, in einer bevorzugten Variante ist die Randkante insbesondere kürzer als ein Werkzeugumfang. Projiziert auf eine Ebene rechtwinklig zur Werkzeugachse, ist die Bogenlänge der Randkante in einer weiteren bevorzugten Ausgestaltung der Erfindung geringer als 300°, bevorzugt geringer als 180°. Diese Größenangaben (Länge oder Bogenlänge der Randkante) beziehen sich jeweils auf eine Quernut beziehungsweise Randfläche einer Quernut oder Einschnürung. Dabei ist es natürlich möglich, dass ein erfindungsgemäßes Bohrwerkzeug mehrere Randkanten, jeweils aneinander beabstandet, aufweist und jede einzelne Randkante den vorgenannten Bedingungen entspricht.

In einer bevorzugten Ausgestaltung der Erfindung, ist vorgesehen, dass die zweite Randfläche parallel zur Arbeitsebene verläuft oder die zweite Randfläche mit der Arbeitsebene einen Arbeitswinkel einschließt.

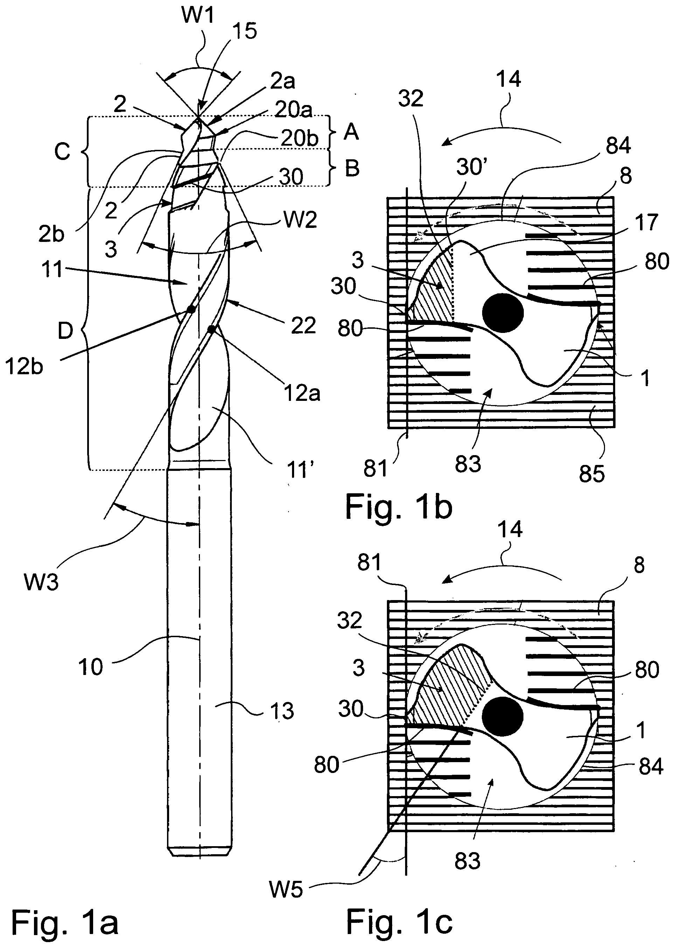

Die Arbeitsebene definiert sich über den Punkt, an welchem die Schneide am Werkstück angreift. Bei einem rotierenden Bohrwerkzeug, wie nach der Erfindung, steht die Arbeitsebene senkrecht auf der radialen Verbindung des Punktes, wo die Schneide in das Material des Werkstückes eingreift, und der Drehachse. Je nach Orientierung der zweiten Randfläche ergibt sich ein größeres oder kleineres Volumen für die Quernut beziehungsweise die Einschnürung. Dies ergibt sich zum Beispiel in Figur 1b beziehungsweise 1c. Bevorzugt ist vorgesehen, dass die zweite Randfläche parallel zur Werkzeugachse verläuft oder mit dieser einen spitzen Winkel einschließt. Durch die Anordnung eines spitzen Winkels ist zum Beispiel das Volumen der Quernut beziehungsweise der Einschnürung entsprechend reduzier- oder vergrößerbar. Mit Hilfe eines solchen Parameters ist es zum Beispiel möglich, das Bohrwerkzeug an die jeweiligen spezifischen Eigenschaften des faserverstärkten Werkstoffes anzupassen. So ist es zum Beispiel möglich, durch eine entsprechende Ausgestaltung beziehungsweise Orientierung der zweiten Randfläche mehr oder weniger Raum für die abgescherten Faserüberstände zur Verfügung zu stellen und so zum Beispiel das erfindungsgemäße Bohrwerkzeug auf Werkstoffe mit höherem oder geringerem Anteil an Faserverstärkung anzupassen. Der Aufbau des erfindungsgemäßen Bohrwerkzeuges ist in der Regel derart, dass dieses ein Schneidenteil aufweist, welches die Werkzeugspitze umfasst und das Schneidenteil von der Werkzeugspitze beginnend nach hinten verlaufend zumindest eine Spannut aufweist. Die Anordnung der Spannut ist dabei sehr variabel gestaltbar, es sind achsparallele, geradgenutete oder schräggenutete Spannuten bekannt, die Spannut ist aber auch gewendelt ausführbar. Die Erfindung beschränkt auch nicht die Anzahl der Spannuten am Bohrwerkzeug. Es können ein, zwei odere mehrere Spannuten vorgesehen sein. Die Spannut wird gängigerweise durch einen Drallwinkel definiert. Die Lage der die Randkante aufweisende Randfläche der Quernut beziehungweise der Einschnürung wird durch einen Neigungswinkel definiert. Üblicherweise wird der Neigungswinkel in der Arbeitsebene (bezogen auf die Werkzeugachse) angegeben, der Drallwinkel hingegen beschreibt die Steigung der Spannut. Erfindungsgemäß ist der Drallwinkel geringer als der komplementäre Neigungswinkel (90° - Neigungswinkel). Insofern verläuft die Randfläche, welche die zur Abscherung der Faserüberstände dienende Randkante zur Verfügung stellt, erheblich steiler.

Es ergibt sich daher, dass die Quernut zum Beispiel zwischen zwei (gewendelten oder gerade verlaufenden) Spannuten angeordnet ist und zum Beispiel jeweils durch einen Materialsteg getrennt ist oder zumindest an einer oder an beiden Enden der Quernut an einer Spannut anschließt.

Insbesondere ist es ausreichend, dass die Quernut sehr viel kürzer ist als die Spannut. Der Einsatzbereich der Quernut ist in axialer Richtung gesehen auch nur auf einen sehr kurzen Bereich beschränkt, wohingegen die Spannut die Aufgabe hat, das zerspante Material von dem Arbeitsbereich nach hinten abzuführen und gegebenenfalls über die gesamte Höhe der Bauteildicke, aus diesem herauszuführen.

In einer bevorzugten Ausgestaltung der Erfindung ist vorgesehen, dass das Bohrwerkzeug mindestens zwei nach hinten verlaufende Spannuten aufweist und die Quernut die Spannuten verbindet. In einer anderen optionalen Variante ist vorgesehen, dass das erste Ende der Quernut an eine erste Spannut anschließt, sodass am anderen Ende der Quernut und der zweiten Spannut aber ein Materialsteg verbleibt. Dieses zweite Ende der Quernut ist dabei am ersten Ende der Quernut bezüglich der Drehrichtung des Bohrwerkzeugs nachlaufend. So ist es möglich, dass die sich an der zweiten Randfläche am zweiten Ende der Quernut ergebende Randkante ebenfalls einen Abschereffekt ergibt. Optional ist vorgesehen, dass - bezogen auf die Bezugsebene - die radiale Randfläche mit der Werkzeugrückebene einen positiven oder negativen Bezugswinkel einschließt. Die Bezugsebene wird als Ebene längs der Werkzeugachse beschrieben.

Erfindungsgemäß ist vorgesehen, dass die Randfläche als Teil einer Quernut oder einer Einschnürung ausgebildet ist. Insbesondere bei der Variante einer Quernut ist die Gestaltung der Quernut variabel möglich, wie zum Beispiel symmetrisch oder asymmetrisch, spitz oder stumpf bzw. trapezartig ausbildbar. Es ist auch möglich, eine dreieckige Quernut oder eine als Kehlnut oder Hohlkehle ausgebildete Quernut vorzusehen. Auch eine rechteckige Ausgestaltung der Quernut (die Nutenden verlaufen radial) ist möglich. Es ist gefunden worden, dass der Abschermechanismus der überstehenden Fasern durch eine spezielle Ausgestaltung der Randfläche erheblich optimierbar ist. Dabei ist gefunden worden, dass ein positiver Neigungswinkel bezüglich der Arbeitsebene den Faserüberstand in die Nut einzieht, und zwar entgegen der Vorschubrichtung des Werkzeugs. Es ergibt sich dann ein Abscheren des Faserüberstands zwischen der Randkante und der Bohrungskante. Dabei ist gefunden worden, dass der Abschermechanismus erheblich verbessert werden kann, wenn der Neigungswinkel größer als der Wirkrichtungswinkel zwischen dem Umfanggeschwindigkeitsvektor $v_c$ und der Vektorsumme von dem Umfanggeschwindigkeitsvektor $v_c$ und dem Vorschubgeschwindigkeitsvektor $v_f$. Dieser Zusammenhang soll an einem folgenden Beispiel erläutert werden:

Ein erfindungsgemäßes Bohrwerkzeug mit einem Durchmesser von 5,6 mm rotiert mit einer Frequenz von 5.500 Umdrehungen pro Minute. Die Umfangsgeschwindigkeit beträgt ca. 97 m pro Minute, eine typische Vorschubgeschwindigkeit beträgt 0,55 m pro Minute. Hieraus ergibt sich zum Beispiel ein Wirkrichtungswinkel von 0,32°. Wird nun der Neigungswinkel der Randfläche (der Quernut oder der Einschnürung) etwas größer gewählt wie der Wirkrichtungswinkel, so wird ein optimales Abscherverhalten erreicht. Dabei ist es von Vorteil, dass die Fasern beim Austritt des Werkzeugs in die Bohrung zurückgezogen werden, wodurch ein weiteres Einreißen der Laminationen gerade im sensiblen Randbereich der Bohrung verhindert wird. Bevorzugterweise sind Variante an der Nebenschneide der Spannuten Führungsfasen vorgesehen, die zu einer Zentrierung bzw. Führung am Umfang dienen. Die Führungsfasen dienen dazu, insbesondere bei hohen Drehzahlen auftretende Schwingungen (Radialkräfte) auszugleichen und die Wirkung der umfangseitig angeordneten Quernut oder Quernuten zu verbessern.

In einer bevorzugten weiteren Ausgestaltung der Erfindung ist vorgesehen, dass das Bohrwerkzeug zumindest teilweise vollrund ausgeführt ist und keine Nebenfreiflächen aufweist. Jedoch wird insbesondere bei manuell geführtem Bohren oder beim Bohren mit niedrigen Drehzahlen die Führung des Werkzeugs verbessert. Es ist möglich, dass die Schneide beschichtet ist bzw. aus Hartmetall besteht oder diamantbeschichtet ist. Die Schneide kann auch durch eine eingesetzte polykristaline Diamantplatte (PKD) oder eine Hartmetallplatte gebildet sein. Zwar führt eine Beschichtung aufgrund der Verrundung der Schneidkante zu einer gewissen schlechteren Zerspanleistung, was auch zu einer entsprechenden Zunahme der Delaminationen oder von Faserüberständen führt, allerdings wird durch die Beschichtung die Standzeit der Werkzeuge erheblich erhöht und durch die erfindungsgemäße Ausgestaltung die Faserüberstände zuverlässig abgetrennt. Es ist bevorzugt, wenn die Breite der Quernut - in Axialrichtung gesehen - nicht größer ist als der Nenndurchmesser des Bohrwerkzeugs und vorzugsweise zwischen 1 und 3 mm beträgt. Die Einschnürung ist derart definiert, dass von der Randfläche nach hinten gesehen sich das Bohrwerkzeug dauerhaft verjüngt, also in diesem Bereich einen Hals bildet und an einem Werkzeugschaft oder an dem Hals im Futter eingespannt ist. Eine Einschnürung ist insofern als "breite Quernut" definiert, bei welcher die Breite der zweiten Randfläche (in Axialrichtung gesehen) größer ist als der Nenndurchmesser des Bohrwerkzeugs.

Es ist gefunden worden, dass es günstig ist, wenn der Neigungswinkel der Quernut bzw. die die Quernut oder Einschnürung begrenzende Randfläche, gemessen umfangseitig, gegenüber der Werkzeugrückebene positiv und kleiner als 60° ist.

Die Nuttiefe der Quernut bzw. der radiale Abstand bei der Einschnürung, gemessen in Radialrichtung, ist bevorzugt kleiner als 40 % des Nenndurchmessers des Bohrwerkzeugs. Die Nuttiefe bzw. der radiale Abstand wird dabei so gewählt, dass das Bohrwerkzeug nicht so stark geschwächt wird, um ein Versagen oder Brechen des Bohrwerkzeugs aufgrund der Zerspankräfte zu vermeiden. Auf der anderen Seite ist die Nuttiefe bzw. der radiale Abstand so groß zu legen, dass vorhandene Faserüberstände problemlos in diese aufgenommen werden. Dabei ist es gefunden worden, dass die Nuttiefe bzw. der radiale Abstand zwischen dem zwei- bis zwanzigfachen des mittleren Durchmessern einer Faser des faserverstärkten Werkstoffs beträgt und insbesondere bevorzugt zwischen 0,2 mm und 3 mm beträgt.

In der Zeichnung ist die Erfindung insbesondere in einem Ausführungsbeispiel schematisch dargestellt. Es zeigen:

Fig. 1a:        in einer Draufsicht ein Bohrwerkzeug nach der Erfindung;

Fig. 1b, Fig. 1c:    jeweils in einer Stirnansicht das erfindungsgemäße Bohrwerkzeug in unterschiedlicher ausgestaltung, in einer Detailansicht während des Erzeugen des Bohrloches;

Fig. 2, Fig. 3:    jeweils in einer Ansicht die vergößerte Darstellung, insbesondere des vorderen Teils des erfindungsgemäßen Bohrwerkzeuges;

Fig. 4a - Fig.4f :    jeweils in einer schematischen Schnittdarstellung verschiedene Varianten des erfindungsgemäßen Bohrwerkzeuges;

Fig. 5:        die grundsätzlich allgemeingültige Ansicht eines Bohrwerkzeuges, auch nach der Erfindung, zur Erläuterung von verwendeten Begriffen und Winkeln;

Fig. 6a, 6b:        jeweils in einer Ansicht, den Bohrvorgang mit dem erfindungsgemäßen Bohrwerkzeug zu verschiedenen Zeitpunkten;

Fig. 7a - 7c:        je in einer dreidimensionalen Ansicht, den Bohrvorgang zu verschiedenen Zeitpunkten.

In den Figuren sind gleiche oder einander entsprechende Elemente jeweils mit den gleichen Bezugszeichen bezeichnet und werden daher, sofern nicht zweckmäßig, nicht erneut beschrieben. Ein Erfindungsgemäßes Bohrwerkzeug ist insbesondere in Fig. 1a überblicksartig dargestellt. Das Bohrwerkzeug 1 besteht aus einem Werkzeugschaft 13, der zum Beispiel für das Einspannen des Bohrwerkzeuges in einem Bohrfutter oder Ähnlichem dient. Das vordere Ende des Bohrwerkzeuges 1 besitzt die Werkzeugspitze 15. Das Bohrwerkzeug 1 teilt sich dabei auf in den Schneidenteil C, in die Spannutlänge D und in den Werkzeugschaft 13 (siehe Fig. 1a). Die jeweiligen Längen der einzelnen Bereiche des Schneidenteiles C, der Spannutlänge D und des Werkzeugschaftes 13 sind den jeweiligen Bearbeitungsaufgaben problemlos anpassbar. Die Spannutlänge D umfasst dabei im wesentlichen die nach hinten geführten Spannut(en) 11, 11'. Das Bohrwerkzeug 1 wird rotatorisch, spanabhebend betrieben, hierzu rotiert das Bohrwerkzeug 1 um seine längsverlaufende Werkzeugachse 10.

Von der Werkzeugspitze 15 beginnend, sind an dem erfindungsgemäßen Bohrwerkzeug eine oder mehrere Spannuten 11, 11' vorgesehen. In dem in Fig.1a gezeigten Ausführungsbeispiel sind zwei Spannuten 11, 11' vorgesehen, die das Bohrwerkzeug mit konstanter Steigung wendelnd umgeben. Die Erfindung ist im Hinblick auf die Ausgestaltung der Spannut (geradeverlaufend, geradegenutet, schräggenutet, mit gleicher oder veränderlicher Steigung usw.) vollständig frei. Die Spannut besitzt auch eine Nebenschneide 22, Führungsfasen 12a, 12b an der Spannut erleichtern den Betrieb und den Einsatz des Bohrwerkzeuges 1.

Das in Fig. 1a dargestellte Bohrwerkzeug besteht aus zwei Stufen. An der vorderen Werkzeugspitze 15 beginnend ist eine Vollbohrstufe A vorgesehen, die als erstes ein kleineres Loch in den Werkstoff einarbeitet. Axial (bezogen auf die Werkzeugachse 10) versetzt, folgt dann die (1.) Aufbohrstufe B. Die Steigung der Spannut 11, 11' ist mit dem Drallwinkel W3 angegeben.

In dem in Fig.1 gezeigten Ausführungsbeispiel besitzt sowohl die Vollbohrstufe A, wie auch die Aufbohrstufe B je zwei Schneiden 2. Diese sind bezogen auf die Werkzeugachse 10 jeweils unter einem Spitzenwinkel W1, W2 zueinander orientiert.

Beide Bohrstufen sind Teil des Schneidenteiles C. Optional sind auch eine Mehrzahl von Aufbohrstufen B vorgesehen. Jede Bohrstufe besitzt mindestens eine oder auch mehrere Schneiden 2. Diese Schneiden 2 dienen auch gleichzeitig als Hauptschneiden und sind für die Erzeugung des Bohrloches primär verantwortlich. Die unter Umständen an den Rand der Spannut 11 angeordnete Nebenschneide 22 unterstützt die Erzeugung des Bohrloches.

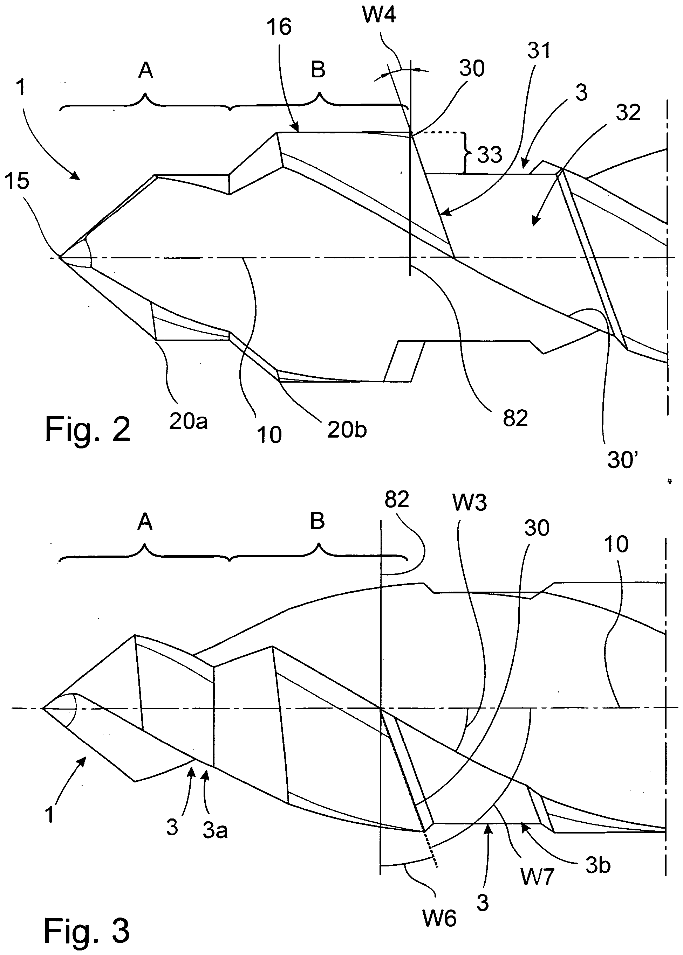

Erfindungsgemäß wird zumindest hinter einer Schneide 2 eine Quernut 3 vorgeschlagen. Die Quernut 3 (vgl. Fig. 2) wird begrenzt von Randflächen 31, 32.

Üblicherweise wird dabei eine Nut oder Quernut 3 von seitlichen Nutwänden und einem Nutboden definiert. Im Sinne der Erfindung wird auch eine Quernut 3 von Randflächen 31, 32 begrenzt. Eine Nutwand der Quernut wird dabei durch eine radial verlaufende Randfläche definiert wie dies in Fig. 2 angedeutet ist. Der Nutboden der Quernut 3 wird dabei gebildet von einer zweiten Randfläche 32, die im wesentlichen parallel zur Werkzeugachse verläuft.

Der Begriff "radial verlaufende Randfläche 31" umfasst dabei nicht nur Flächenausrichtungen deren Flächennormale parallel zur Werkzeugachse 10 verlaufen, vielmehr ist der Begriff "radial verlaufende Randfläche 31" im Sinne der Erfindung sehr viel weiter definiert, nämlich, es handelt sich bei der (radial verlaufenden) Randfläche 31 um eine Rand- oder Begrenzungsfläche, die mit der Mantelfläche 16, die das Bohrwerkzeug 1 seitlich abschließt einen spitzen rechten oder stumpfen Winkel einschließt. Da diese Randfläche 31 in Richtung auf die Werkzeugachse (von der Mantelfläche 16 gesehen) verläuft, verläuft sie insofern radial was auch einen (in der Regel spitzen) Winkel zur Lotrechten der Werkzeugachse 10 einschließt. Unter dem Begriff "radial verlaufend" ist auch "in radialer Richtung - gegebenenfalls unter einem Winkel - verlaufend" zu verstehen und hiermit gleichwirkend.

Erfindungsgemäß ist die Randkante 30, 30' jeweils einzeln -je nach Ausgestaltung - oder gegebenenfalls auch gemeinsam, für ein zuverlässiges Abtrennen der Faserüberstände 80 vorgesehen. Die Randkante 30, 30' begrenzt die jeweils dazugehörige Randfläche 31 beziehungsweise 32. Die Randkante 30, 30' wirkt somit schneiden- oder messerartig und quetscht den in das Bohrloch 83 (vgl. Fig. 1b, 1c) hineinstehenden Faserüberstand 80 zwischen sich und der Wandung 84 der Bohrung 83 ein und ab. Dabei ist zu beachten, dass die erfindungsgemäß vorgesehene Randkante 30, 30' sich sowohl bei einer Lösung mit einer Quernut 3, ergibt wie auch bei einer Lösung bei welcher an Stelle einer (kürzeren) Quernut 3 auch eine Einschnürung vorgesehen ist. Eine Einschnürung ist im Sinne dieser Schrift so zu verstehen, dass der Durchmesser im Bereich der Einschnürung dauerhaft geringer ist als der Nenndurchmesser. Gegebenenfalls ist auch der Werkzeugschaft verjüngt oder auch wieder aufgeweitet, in diesem Bereich ist die Erfindung variabel ausgestaltbar.

Wie insbesondere in Fig. 2 gut zu erkennen ist, gibt es zwei verschieden wirkende beziehungsweise angeordnete Randkanten 30, 30'. Die erste Randkante 30 befindet sich dabei an der radial verlaufenden Randfläche 31. Aber auch die an der zweiten, weiteren Randfläche 32 vorgesehene Randkante 30' ist dazu geeignet ein Abscheren der Faserüberstände zu erreichen, gegebenenfalls aber nicht mit der gleichen Effizienz wie die erste Randkante 30. Die zweite Randkante 30' ergibt sich als Begrenzung der als Nutboden fungierenden, zweiten Randfläche 32. Besitzt das erfindungsgemäße Bohrwerkzeug 1 entlang seiner Werkzeugachse einen Flugkreis mit gleichbleibendem Durchmesser, so ergibt es sich, dass auch die Randkante 30' der zweiten Randfläche 32 zwischen sich und der Wandung 84 der Bohrung 83 Faserüberstände, die in die Bohrung 83 einstehen, abtrennt oder abschert. Diese Variante ist mit dem Bohrwerkzeug nach Fig. 1b gezeigt.

Auch bei etwas geringeren Durchmessern besteht ebenfalls noch eine Abschermöglichkeit, nämlich dann, wenn der verbleibende Spalt im Bereich der Randkante 30' kleiner ist wie der mittlere Durchmesser der in das Bohrloch 83 einstehenden Faserüberstände 80.

Die Schneide 2, sowohl der Vollbohrstufe A, wie auch der Aufbohrstufe B werden insbesondere rückseitig (von der Werkzeugspitze 15 abgewandt) von Schneidenecken 20a (für die Schneide 2a der Vollbohrstufe A) und Schneidenecke 20b (der Schneide 2b der Aufbohrstufe B) begrenzt. Zumindest gleich danach schließt sich dann die Randkante 30, 30' an.

Wie sich gut aus einem Vergleich der verschiedenen Varianten des Bohrwerkzeuges 1 nach Fig. 2 und 3 ergibt, ist nach Fig. 2 die Quernut 3 nur nach der Schneide 2 der Aufbohrstufe B angeordnet.

Hier entgegen sind bei dem Vorschlag nach Fig. 3 zwei Quernuten 3a, 3b vorgesehen. Eine erste Quernut 3a befindet sich dabei im Bereich der Vollbohrstufe A, die Ausgestaltung der Aufbohrstufe B mit der zweiten Quernut 3b ist dem Vorschlag nach Fig. 2 sehr ähnlich.

Der Vorteil einer solchen Ausgestaltung liegt darin, dass sofort nach dem Erzeugen der Bohrung durch die erfindungsgemäß vorgeschlagene Quernut oder Einschnürung ein Abtrennen der Faserüberstände 80 erfolgt. Bestehen keine Faserüberstände so ist auch die Gefahr einer Delamination erheblich verringert, die aus einer andauernden mechanischen Beanspruchung des aus dem Verbundmatrix herausstehenden Faserüberstandes erfolgt. Wird der Faserüberstand sofort nach dem Erzeugen der Bohrung 83 abgetrennt, wie dies bei dem Vorschlag nach Fig. 3 vorgesehen ist, wird somit die Qualität der Bohrung und auch die mechanische Belastbarkeit des Bohrrandes erheblich verbessert.

In Fig. 1b beziehungsweise 1c sind zwei unterschiedliche erfindungsgemäße Bohrwerkzeuge 1 im Einsatz gezeigt. Das Bohrwerkzeug ist zum Beispiel von vorne zu sehen, wie es gerade den Werkstoff 8 durchbohrt. Bei dem Werkstoff 8 handelt es sich um einen faserverstärkten Werkstoff, die einzeln in dem Werkstoff eingebetteten Fasern sind mit dem Bezugszeichen 85 gekennzeichnet. Die Rotationsrichtung des Bohrwerkzeuges 1 ist mit dem gebogenen Pfeil 14 angegeben und entgegen den Uhrzeigerverlauf gerichtet. Es ist gut zu erkennen, dass eine Mehrzahl von Faserüberständen 80 in die Bohrung 83 einstehen. Dieses Zwischenergebnis der Bohrung ist wie es bislang nach dem Stand der Technik bekannt gewesen ist. Die bekannten Bohrgeometrien waren nicht in der Lage eine Bohrung 83 ohne in die Bohrung einstehende Faserüberstände 80 zu erzeugen. Die erfindungsgemäße Ausgestaltung ergibt aber, dass diese Faserüberstände 80, nachdem die Schneide 2 den Werkstoff 8 verlassen hat, abgetrennt werden. In Fig. 1b beziehungsweise 1c ist an dem Bohrwerkzeug 1 im linken Bereich gestrichelt die Quernut 3 angeordnet. Die gewählte Ansicht für die Randkante 30 ist nicht optimal, vielmehr werden in dieser Ansicht die Orientierung der die Quernut 3 beziehungweise die Einschnürung gegebenenfalls definierenden zweiten Randfläche 32 beschrieben.

Mit dem Bezugszeichen 81 ist die Arbeitsebene definiert. Die Arbeitsebene steht am Eingriffspunkt der Schneide an dessen Flugkreis tangential an und definiert den Arbeitspunkt des Bohrwerkzeuges. Relativ zu dieser Arbeitsebene 81 ist nach Fig. 1b die zweite Randfläche 32 parallel verlaufend. In Rotationsrichtung des Bohrwerkzeuges 1 nach der Quernut 3 nachlaufend folgt die Spannut, zwischen der Quernut 3 und der Spannut befindet sich der Materialsteg 17, d. h. in diesem Ausführungsbeispiel verbindet die Quernut 3 nicht die beiden Spannuten 11, 11'. Die Randkante 30' ergibt sich dabei in Rotationsrichtung 14 vor dem Materialsteg 17.

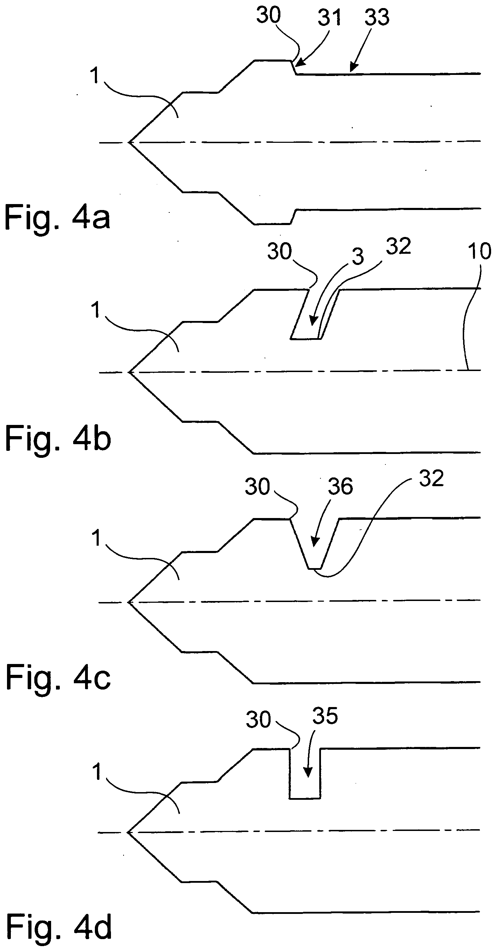

Diese Lösung allerdings ist in der Fig. 1c gezeigt. Die Ansicht ist wieder vergleichbar wie bei Fig. 1b, wobei die (ebene) zweite Randfläche 32 mit der Arbeitsebene 81 den Arbeitswinkel W5 einschließt. Es ist gut zu erkennen, dass somit eine Verbindung durch die Quernut 3 zwischen den beiden Spannuten 11, 11' erzielbar ist. Eine solche Verbindung wäre aber auch nach der Lösung nach Fig. 1b realisierbar, nämlich derart, dass die Tiefe der Quernut erhöht wird, also die Lage der weiteren Randfläche 32 weiter zur Werkzeugachse hin verlagert ist und so auch der Materialsteg 17 von der Quernut 3 durchdrungen ist. Für die Lage der Quernut 3 beziehungsweis für die das Abtrennen der Faserüberstände 80 verantwortliche Randkante 30 beziehungsweise der die Randkante 30 tragenden Randfläche 31 sind aber noch weitere Winkel beziehungsweise Bezugsgrößen von Interesse. In Fig. 2 ist das Bohrwerkzeug 1 im Bezug auf eine Bezugsebene gezeigt. Die Bezugsebene ist dabei eine Ebene längs der Werkzeugachse. Die Randkante 30 schließt dabei mit der Werkzeugrückebene 82 (dies ist eine Ebene die rechtwinklig zur Werkzeugachse verläuft) den Bezugswinkel W4 ein. Dieser kann wie in Fig. 2 gezeigt ist positiv sein, es sind aber auch negative Bezugswinkel W4 möglich, ein solches Ausführungsbeispiel ist in Fig. 4b angedeutet.

Fig. 3 zeigt eine Ansicht des Bohrwerkzeuges 1 (gemäß einer anderen Variante wie bereits beschrieben) in der Arbeitsebene. Hier schließt die Randkante 30 mit der Werkzeugrückebene 82 einen positiven Neigungswinkel W6 ein.

Die Differenz von 90° und dem Neigungswinkel W6 wird als komplementärer Neigungswinkel W7 beschrieben und entspricht dem Drallwinkel wie er von der Definition her für die Spannut definiert ist, nämlich einen Winkel der auf die Werkzeugachse bezogen ist. Der eigentliche Drallwinkel W3 der Spannut ist in Fig. 3 ebenfalls angegeben. Es ist deutlich zu erkennen, dass der komplementäre Neigungswinkel W7 deutlich größer ist wie der Drallwinkel W3 der Spannut, die Quernut, die auch nur in einer sehr geringen Länge in das Bohrwerkzeug eingearbeitet ist, verläuft hier unter einem sehr viel steileren Winkel.

Die Fig. 4a - 4f bringen zum Ausdruck, das die Ausgestaltung der vorgesehenen Randkante 30 beziehungsweise der Quernut 3 oder Einschnürung 33 sehr variabel ist.

In Fig. 4a ist die Variante mit der Einschnürung 33 gezeigt, die zur Werkzeugspitze 15 hin orientiert durch die (radial verlaufende) Randfläche 31 begrenzt ist, welche die Randkante 30 bestimmt.

Fig. 4b zeigt die Anordnung einer Quernut deren Nutflächen jeweils parallel verlaufen , wobei es sich hier aber nicht um eine Rechtecknut 35 (vgl. Fig. 4d) handelt, sondern die Nutwände mit der Werkzeugachse 10 einen spitzen Winkel einschließen.

Fig. 4c zeigt eine trapezartige Quernut 36. Es ist klar, dass die das Trapez definierenden Winkel beliebig ausgebildet sein könne, das heißt die Fußwinkel, die hier jeweils größer 90° sind (der Fußwinkel befindet sich zwischen den jeweiligen Nutwänden und dem Nutboden) können alternativ oder gemischt auch kleiner 90° sein.

Fig. 4d zeigt ein Bohrwerkzeug 1 mit einer Rechtecknut 35.

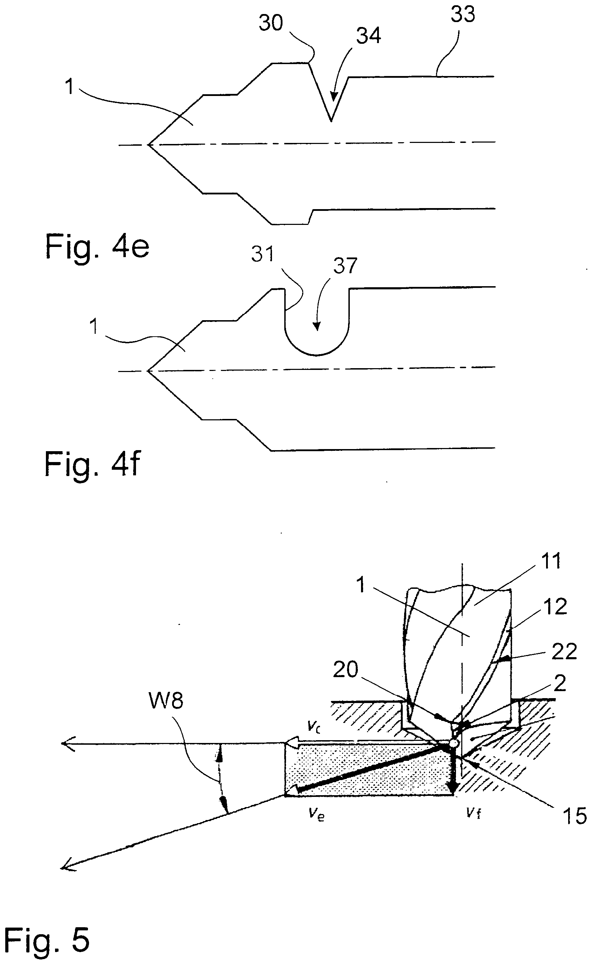

Die Variante nach Fig. 4e zeigt den Einsatz einer Dreiecksnut 34, kombiniert mit der Einschnürung 33. Es ist klar, dass die Ausgestaltung der Dreiecksnut 34 mit oder ohne einer entsprechenden nachfolgenden Einschnürung 33 ausgebildet sein kann.

Bei den vorgenannten Varianten nach Fig. 4a - 4e ist ein unstetiger Übergang zwischen der ersten Randfläche 31 und der weiteren Randfläche 32 vorgesehen. Die Variante nach Fig. 4f allerdings zeigt den Einsatz einer Kehlnut 37, und somit einen stetigen Übergang zwischen den beiden Randflächen 31, 32. In Fig. 5 ist die Schneidengeometrie an einem Spiralbohrer wie er im Stand der Technik verfügbar ist beispielhaft beschrieben. Die hier definierte Schneidengeometrie ist aber in gleicher Weise auf das Bohrwerkzeug gemäß der Erfindung übertragbar, weswegen hier auch die Bezugzeichen der Erfindung Verwendung finden. Mit 1 ist das Bohrwerkzeug gekennzeichnet, mit 11 die Spannut, mit 12 die Führungsfase. Die Nebenschneide trägt das Bezugzeichen 22, die Schneide (Hauptschneide) das Bezugzeichen 2, die Schneidenecke ist mit 20, und die Werkzeugspitze mit 15 gekennzeichnet. Fig. 5 ist wichtig im Zusammenhang mit der Definition des Wirkrichtungswinkels W8 der zwischen dem Umfangsgeschwindigkeitsvektor $v_c$ und dem effektiven Geschwindigkeitsvektor $v_e$ besteht. Letzterer, der effektive Geschwindigkeitsvektor $v_e$, ist dabei die Vektorsumme des Umfangsgeschwindigkeitsvektors $v_c$ und dem Vorschubgeschwindigkeitsvektor $v_f$. Es ist dabei gefunden worden, dass der Abschermechanismus erheblich verbessert wird, wenn folgende Bedingung eingehalten wird

$$\text{Neigungswinkel W6} > \text{Wirkrichtungswinkel W8}$$

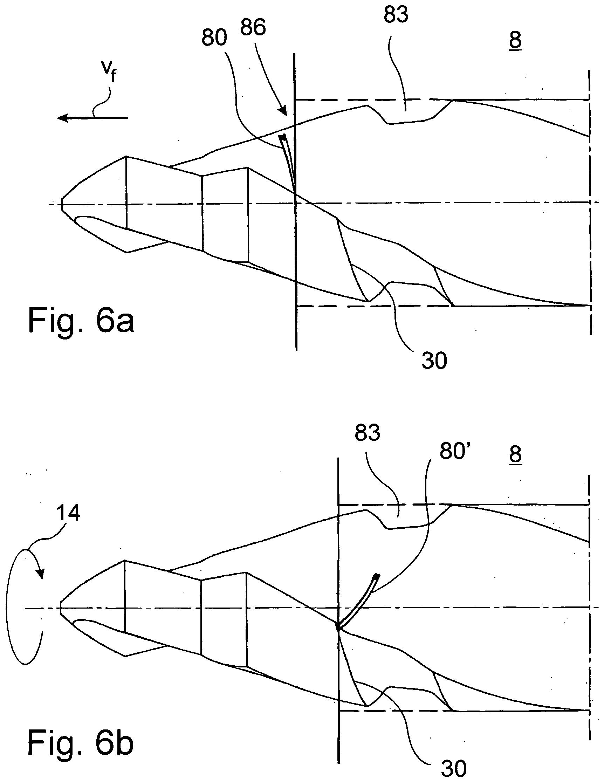

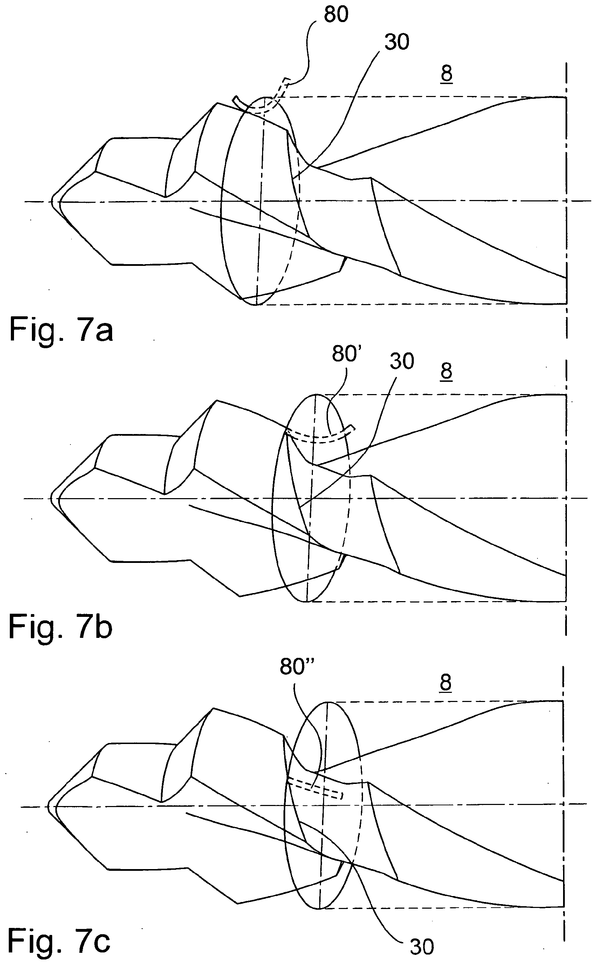

Insbesondere bewirkt der Neigungsinkel in der Arbeitsebene ein Heranziehen der Faserüberstände 80 entgegen der Vorschubrichtung $v_f$ und ein Abscheren der Faserüberstände 80 zwischen der Randkante 30, insbesondere der radial verlaufenden Randfläche 31 und der Bohrungswandung 84 beziehungsweise Bohrungskante. Diese Situation ist in den Fig. 6a, 6b, sowie Fig. 7a, 7b und 7c gezeigt.

In Fig. 6a ist der Werkstoff 8, in dem eine Bohrung 83 einzubringen ist, in einer Seitenansicht gezeigt. Der Hauptschneidenbereich des Bohrwerkzeuges 1 hat den Werkstoff durchdrungen und insbesondere auf der Austrittsseite 86 des Werkstoffes 8 in diesen eingebettete Faserüberstände 80 neigen dazu nach außen gebogen zu werden und sich somit einem Abtrennen zu entziehen. Es erfolgt dann eine starke mechanische Beanspruchung dieses Faserüberstandes, da dieser andauernd versucht dem umlaufenden Bohrwerkzeug, das ja auch eine seitliche Spannut aufweist, auszuweichen. Diese hochfrequente Beanspruchung des Faserüberstandes 80 führt zu einer entsprechenden Auslockerung des Faserüberstandes 80, was sich unter Umständen nicht auf den Wandungsbereich 84 der Bohrung 83 beschränkt, sondern insbesondere über den tolerierbaren Bereich hinaus in den übrigen Werkstoff 8 greift.

Die Randkante 30 ist in der mit Fig. 6a gezeigten Momentaufnahme noch innerhalb der Bohrung 83, und noch nicht axial so weit vorgeschoben, dass diese auf den störenden Faserüberstand 80 wirken könnte.

In Fig. 6b allerdings ist das erfindungsgemäße Bohrwerkzeug 1 um ein Stück in Richtung der Vorschubgeschwindigkeit $v_f$ (hier nach links) axial versetzt worden derart, dass der in Rotationsrichtung vordere Teil (die Rotationsrichtung ist mit dem Pfeil 14 angegeben) den aus dem Werkstoff austretenden Beginn des Faserüberstandes 80 ergreift und (aufgrund der Neigung der Randkante 30) diesen Faserüberstand 80, wie deutlich erkennbar, in das Bohrloch 83 zurückzieht. Der Faserüberstand 80 wird zwischen der Randkante 30 und der Wandung 84 der Bohrung 83 eingeklemmt und dann abgeschert.

Die gleiche Situation ist auch in der Bildsequenz Fig. 7a, 7b und 7c gezeigt. Dabei ist in Fig. 7a der aus der Bohrung 83 herausstehende Faserüberstand gut zu erkennen. Desweiteren ist in Fig. 6b, 7b und 7c der in die Bohrung 83 zurückgezogene Faserüberstand mit dem Bezugzeichen 80' beziehungsweise 80" gekennzeichnet.

**Patentansprüche**

1.  Bohrwerkzeug, insbesondere zum Bohren von faserverstärktem Werkstoff, wobei das Bohrwerkzeug (1) zumindest eine Schneide (2), zumindest eine nach hinten verlaufende Spannut (11) und in Vorschubrichtung des Bohrwerkzeuges (1) hinter der Schneide (2) eine oder mehrere, jeweils eine von der Spannut (11) verschiedene Quernut (3) oder Einschnürung begrenzende, eine Randkante (30) aufweisende radiale Randfläche (31) besitzt und zumindest eine Randkante (30) zum Abtrennen von Faserstücken (80) des faserverstärkten Werkstoffes (8) dient, **dadurch gekennzeichnet, dass** der Neigungswinkel (W6) der Randkante (30) der radialen Randfläche (31), gemessen umfangsseitig gegenüber einer rechtwinklig zur Werkzeugachse verlaufenden Werkzeugrückebene (82) positiv und kleiner als 60° ist und der komplementäre Neigungswinkel (W7) der Randkante (30) der radialen Randfläche (31), wobei der komplementäre Neigungswinkel (W7) der Randkante (30) 90° - der Neigungswinkel (W6) der Randkante (30) ist, größer ist als der Drallwinkel (W3) der Spannut (11).

2.  Bohrwerkzeug nach Anspruch 1, **dadurch gekennzeichnet, dass** das Bohrwerkzeug (1) eine Vollbohrstufe (A) und gegebenenfalls eine oder mehrere Aufbohrstufen (B) und sowohl die Vollbohrstufe (A) mindestens eine als Hauptschneide (2a) dienende Schneide (2), wie auch die einzelnen Aufbohrstufen mindestens eine als Hauptschneide (2b) dienende Schneide (2) aufweist.

3.  Bohrwerkzeug nach einem oder beiden der vorangehenden Ansprüche, **dadurch gekennzeichnet, dass** die Randfläche (31) bezüglich der Werkzeugachse (10) gerundet beziehungsweise konvex, in sich eben, gewölbt, beziehungsweise gewendelt ausgebildet ist.

4.  Bohrwerkzeug nach einem der mehreren der vorhergehenden Ansprüche, **dadurch gekennzeichnet, dass** die zum Abtrennen von Faserstücken (80) dienende Randkante (30) mit geringem axialem Abstand zur Schneide (2, 2a, 2b) angeordnet ist.

5.  Bohrwerkzeug nach einem oder mehreren der vorhergehenden Ansprüche, **dadurch gekennzeichnet, dass** eine zweite an die radial orientierte Randfläche (31) winklig anschließende, bevorzugt ebene Randfläche (32) vorgesehen ist.

6.  Bohrwerkzeug nach Anspruch 5, **dadurch gekennzeichnet, dass** die zweite Randfläche (32) parallel zur Arbeitsebene (81) verläuft oder die zweite Randfläche (32) mit der Arbeitsebene (81) einen Arbeitswinkel (W5) einschließt und/oder die zweite Randfläche (32) parallel verläuft zur Werkzeugachse (10) oder mit der Werkzeugachse (10) einen spitzen Winkel einschließt.

7.  Bohrwerkzeug nach einem oder mehreren der vorhergehenden Ansprüche, **dadurch gekennzeichnet, dass** das Bohrwerkzeug (1) mindestens eine nach hinten verlaufende Spannut (11) aufweist und zwischen der Spannut (11) und der Quernut (3) ein Materialsteg (17) vorgesehen ist.

8.  Bohrwerkzeug nach einem oder mehreren der vorhergehenden Ansprüche, **dadurch gekennzeichnet, dass** das Bohrwerkzeug (1) mindestens eine nach hinten verlaufende Spannut (11) aufweist und die Quernut (3) an die Spannut (11) anschließt.

9.  Bohrwerkzeug nach einem oder mehreren der vorhergehenden Ansprüche, **dadurch gekennzeichnet, dass** die Quernut (3) sehr viel kürzer ist als die Spannut (11) und/oder das Bohrwerkzeug (1) mindestens zwei nach hinten verlaufende Spannuten (11, 11') aufweist und die Quernut (3) die Spannuten (11, 11') verbindet.

10. Bohrwerkzeug nach einem oder mehreren der vorhergehenden Ansprüche, **dadurch gekennzeichnet, dass**, bezogen auf die Bezugsebene, die radiale Randfläche (31) mit der Werkzeugrückebene (82) einen positiven oder negativen Bezugswinkel (W4) einschließt.

11. Bohrwerkzeug nach einem oder mehreren der vorhergehenden Ansprüche, **dadurch gekennzeichnet, dass** an der Nebenschneide (22) der Spannuten (11) Führungsfasen (12a, 12b) vorgesehen sind und/oder ein zumindest teilweise vollrund ausgeführtes Bohrwerkzeug ohne Nebenfreifläche vorgesehen ist.

12. Bohrwerkzeug nach einem oder mehreren der vorhergehenden Ansprüche, **dadurch gekennzeichnet, dass** die Schneide (2) beschichtet ist, vorzugsweise aus Hartmetall besteht oder diamantbeschichtet ist oder die Schneide durch eine eingesetzte polykristalline Diamant (PKD) -Platte oder eine Hartmetall-Platte gebildet ist

13. Bohrwerkzeug nach einem oder mehreren der vorhergehenden Ansprüche, **dadurch gekennzeichnet, dass** die Nuttiefe der Quernut (3) oder der radiale Abstand bei der Einschnürung, gemessen in Radialrichtung, kleiner als 40 % des Nenndurchmessers des Bohrwerkzeuges (1) ist.

14. Bohrwerkzeug nach einem oder mehreren der vorhergehenden Ansprüche, **dadurch gekennzeichnet, dass** die Nuttiefe der Quernut (3) bzw. der radiale Abstand bei der Einschnürung, gemessen in Radialrichtung, zwischen 0,2 mm und 3 mm beträgt.

**Claims**

1. A drilling tool, in particular for drilling of fiber-reinforced material, wherein the drilling tool (1) has at least one cutting edge (2), at least one chip groove (11) extending backwards and, with regard to the feed direction of the drilling tool (1) behind the cutting edge (2), one or more radial border surface (31) which confines a transverse groove (3) or constriction different from the chip groove (11) and comprises a border edge (30) and at least one border edge (30) serves for cutting off fiber pieces (80) of the fiber-reinforced material (8),
**characterized in that** the inclination angle (W6) of the border edge (30) of the radial edge surface (31), measured at the circumferential side relative to a tool back plane (82) extending perpendicular to the tool axis, is positive and smaller than 60° and
the complementary inclination angle (W7) of the border edge (30) of the radial border surface (31) is larger than the helix angle (W3) of the chip groove (11), the complementary inclination angle (W7) of the border edge (30) being 90° minus the inclination angle (W6) of the border edge (30).

2. The drilling tool according to claim 1, **characterized in that** the drilling tool (1) has a full drilling stage (A) and, as the case may be, one or more boring stages (B) and wherein the full drilling stage (A) has at least one cutting edge (2) serving as a main cutting edge (2a) as well as the individual boring stages comprise at least one cutting edge (2) serving as a main cutting edge (2b).

3. The drilling tool according to one of or both preceding claims, **characterized in that** the border surface (31) with respect to the tool axis (10) is shaped curved or convex, plane in itself, concave or coiled.

4. The drilling tool according to one or more of the preceding claims, **characterized in that** the border edge (30) serving for cutting off fiber pieces (80) is arranged at a small axial distance from the cutting edge (2, 2a, 2b).

5. The drilling tool according to one or more of the preceding claims, **characterized in that** a, preferably flat, second border surface (32) which is angularly connected to the radially oriented border surface (31) is provided.

6. The drilling tool according to claim 5, **characterized in that** the second border surface (32) extends parallel to the working plane (81) or that the second border surface (32) encloses a working angle (W5) with the working plane (81) and/or the second border surface (32) extends parallel to the tool axis (10) or encloses an acute angle with the tool axis (10).

7. The drilling tool according to one or more of the preceding claims, **characterized in that** the drilling tool (1) comprises at least one chip groove (11) extending backwards and a material ridge (17) is provided between the chip groove (11) and the transverse groove (3).

8. The drilling tool according to one or more of the preceding claims, **characterized in that** the drilling tool (1) comprises at least one chip groove (11) extending backwards and the transverse groove (3) connects to the chip groove (11).

9. The drilling tool according to one or more of the preceding claims, **characterized in that** the transverse groove (3) is much shorter than the chip groove (11) and/or the drilling tool (1) comprises at least two chip grooves (11, 11') extending backwards and the transverse groove (3) connects the chip grooves (11, 11').

10. The drilling tool according to one or more of the preceding claims, **characterized in that** in relation to the reference plane, the radial border surface (31) encloses a positive or negative reference angle (W4) with the tool back plane (82).

11. The drilling tool according to one or more of the preceding claims, **characterized in that** guide chamfers (12a, 12b) are provided at the secondary cutting edge (22) of the chip grooves (11) and/or that an at least partially entirely round shaped drilling tool is provided without secondary clearance surface.

12. The drilling tool according to one or more of the preceding claims, **characterized in that** the cutting edge (2) is coated, is preferably made from cemented carbide or is diamond-coated or that the cutting edge is formed by an inserted polycrystalline diamond (PCD) plaque or by a cemented carbide plaque.

13. The drilling tool according to one or more of the preceding claims, **characterized in that** the groove depth of the transverse groove (3) or the radial distance in the constriction, as measured in the radial direction, is smaller than 40 percent of the nominal diameter of the drilling tool (1).

14. The drilling tool according to one or more of the preceding claims, **characterized in that** the groove depth of the transverse groove (3) or the radial distance in the constriction, as measured in the radial direction, is between 0.2 and 3 mm.

**Revendications**

1. Outil de perçage, en particulier servant à percer un matériau renforcé par des fibres, dans lequel l'outil de perçage (1) possède au moins un tranchant (2), au moins une goujure (11) s'étendant vers l'arrière et, dans la direction d'avance de l'outil de perçage (1), derrière le tranchant (2), une ou plusieurs surfaces de bord (31) radiales délimitant respectivement une rainure transversale (3) ou un rétrécissement différente/différent de la goujure (11), présentant une arête de bord (30) et au moins une arête de bord (30) sert à séparer des morceaux de fibres (80) du matériau (8) renforcé par des fibres, **caractérisé en ce que** l'angle d'inclinaison (W6) de l'arête de bord (30) de la surface de bord (31) radiale, mesuré côté périphérie par rapport à un plan arrière d'outil (82) s'étendant à angle droit par rapport à l'axe d'outil, est positif et inférieur à 60°, et l'angle d'inclinaison (W7) complémentaire de l'arête de bord (30) de la surface de bord (31) radiale est supérieur à l'angle d'hélice (W3) de la goujure (11), dans lequel l'angle d'inclinaison (W7) complémentaire de l'arête de bord (30) est de 90° - l'angle d'inclinaison (W6) de l'arête de bord (30).

2. Outil de perçage selon la revendication 1, **caractérisé en ce que** l'outil de perçage (1) présente une phase de perçage dans le plein (A) et éventuellement une ou plusieurs phases d'alésage (B) et la phase de perçage dans le plein (A) présente au moins un tranchant (2) faisant office de tranchant principal (2a) tout comme les diverses phases d'alésage présentent au moins un tranchant (2) faisant office de tranchant principal (2b).

3. Outil de forage selon l'une ou plusieurs des revendications précédentes, **caractérisé en ce que** la surface de bord (31) est réalisée, par rapport à l'axe d'outil (10), de manière arrondie ou de manière convexe, de manière plane en soi, de manière bombée ou de manière enroulée.

4. Outil de perçage selon l'une ou plusieurs des revendications précédentes, **caractérisé en ce que** l'arête de bord (30) servant à séparer des morceaux de fibres (80) est disposée à une faible distance axiale par rapport au tranchant (2, 2a, 2b).

5. Outil de perçage selon l'une ou plusieurs des revendications précédentes, **caractérisé en ce qu'**est prévue une deuxième surface de bord (32) de manière préférée plane, se raccordant selon un angle à la surface de bord (31) orientée de manière radiale.

6. Outil de perçage selon la revendication 5, **caractérisé en ce que** la deuxième surface de bord (32) s'étend de manière parallèle par rapport au plan de travail (81), ou la deuxième surface de bord (32) forme avec le plan de travail (81) un angle de travail (W5), et/ou la deuxième surface de bord (32) s'étend de manière parallèle par rapport à l'axe d'outil (10) ou forme avec l'axe d'outil (10) un angle aigu.

7. Outil de perçage selon l'une ou plusieurs des revendications précédentes, **caractérisé en ce que** l'outil de perçage (1) présente au moins une goujure (11) s'étendant vers l'arrière, et une nervure de matériau (17) est prévue entre la goujure (11) et la rainure transversale (3).

**8.** Outil de perçage selon l'une ou plusieurs des revendications précédentes, **caractérisé en ce que** l'outil de perçage (1) présente au moins une goujure (11) s'étendant vers l'arrière, et la rainure transversale (3) se raccorde à la goujure (11).

**9.** Outil de perçage selon l'une ou plusieurs des revendications précédentes, **caractérisé en ce que** la rainure transversale (3) est bien plus courte que la goujure (11), et/ou l'outil de perçage (1) présente au moins deux goujures (11, 11') s'étendant vers l'arrière et la rainure transversale (3) relie les goujures (11, 11').

**10.** Outil de perçage selon l'une ou plusieurs des revendications précédentes, **caractérisé en ce que**, par rapport au plan de référence, la surface de bord (31) radiale forme avec le plan arrière d'outil (82), un angle de référence (W4) positif ou négatif.

**11.** Outil de perçage selon l'une ou plusieurs des revendications précédentes, **caractérisé en ce que** des chanfreins de guidage (12a, 12b) sont prévus au niveau du tranchant secondaire (22) des goujures (11), et/ou un outil de perçage réalisé au moins en partie de manière pleinement ronde est prévu sans surface libre secondaire.

**12.** Outil de perçage selon l'une ou plusieurs des revendications précédentes, **caractérisé en ce que** le tranchant (2) est doté d'un revêtement, de préférence est constitué de métal dur ou est doté d'un revêtement en diamant, ou le tranchant est formé par une plaque insérée en diamant polycristallin (DPC) ou par une plaque en métal dur.

**13.** Outil de perçage selon l'une ou plusieurs des revendications précédentes, **caractérisé en ce que** la profondeur de rainure de la rainure transversale (3) ou la distance radiale dans le cas du rétrécissement, mesurée dans la direction radiale, est inférieure à 40 % du diamètre nominal de l'outil de perçage (1).

**14.** Outil de perçage selon l'une ou plusieurs des revendications précédentes, **caractérisé en ce que** la profondeur de rainure de la rainure transversale (3) ou la distance radiale dans le cas du rétrécissement, mesurée dans la direction radiale, présente une valeur comprise entre 0,2 mm et 3 mm.

Fig. 1a

Fig. 1b

Fig. 1c

Fig. 2

Fig. 3

Fig. 4a

Fig. 4b

Fig. 4c

Fig. 4d

**Fig. 4e**

**Fig. 4f**

**Fig. 5**

Fig. 6a

Fig. 6b

**Fig. 7a**

**Fig. 7b**

**Fig. 7c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19735024 A1
- WO 9921674 A1
- DE 102009049087 A1